# EUROPEAN PATENT APPLICATION

(11) **EP 2 374 992 A1**
(43) Date of publication of application: **12.10.2011**
(21) Application number: 11160338.7
(22) Date of filing: 30.03.2011
(51) Int. Cl.: E21B 43/01, F03D 11/04, F16L 1/15, F16L 3/00, F16L 3/08

(54) **A support device**

(30) Priority: 07.04.2010 NO 20100494
(71) Applicant: Aker Jacket Technology AS, 1326 Lysaker (NO)
(72) Inventor: Taugbøl, Tor, Kristian, N-0198, Oslo (NO)
(74) Representative: Onsagers AS

(57) **Abstract**

A support device (3; 4) for a j-tube or similar comprises a plate-shaped element having a first end portion (16) for rigid connection to a structure (14), at least one second end portion (17) for rigid connection to respective ones of the elongate element (2), and at least one intermediate portion (15) between said end portions, each of said intermediate portion having a width dimension which is less than either one of the width dimensions of the end portions, and a first transition region (19) between the between the intermediate portion and the first end portion (16) and a second transition region (18) between the intermediate portion and the second end portion (16). When the support device (3; 4) is connected to the structure and the elongate element and subjected to bending moments by either one of the structure or the elongate element, the maximum bending occurs in said transition regions (18, 19) and axial compression and tension of the elongate element (2) due to movements of the structure (14) is reduced or substantially avoided.

## Description

### Field of the invention

The invention concerns a device for supporting an elongate element, and a substructure, as set out in the introduction to the independent claims 1 and 4.

### Background of the invention

The state: of the art includes substructures also referred to as "jackets" for installation on a seabed (via piles or similar devices) and extending a distance above the sea level where it provide supports for installations such as platform decks and slender columns for supporting wind powered plants for generating electricity. A substructure or "jacket" may typically comprise a truss structures, i.e. having main supports - or legs - and diagonal bracing.

In general, such substructure is provided with one or more j-shaped tubes, commonly referred to as "j-tubes", extending between the seabed and the upper part of the structure. The j-tubes are essentially guide tubes which are used for pulling-in, protecting and supporting cables (not shown), e.g. high voltage cables for the electricity being produced by a wind turbine. Normally, j-tubes have a curved and funnel-shaped lower end, which facilitates the pull-in operation, and a generally longitudinal section, i.e. extending along the vertical length of the substructure. In wind power applications, as several wind-powered plants normally are connected in a grid, it is customary to install two j-tubes on each substructure.

The action of the wind, both directly and via the rotation of the turbine, generates considerable forces in the substructure. This will cause flexing movements in the substructure, subjecting it (i.e. the legs and bracing) to alternating compression and tension. For this reason, it is normally not feasible to use a rigid connection between the longitudinal section of the j-tube and the substructure, because the resulting required transfer of large shear forces or deformations through the j-tube connections. This is particularly the case for large substructures placed in great water depths (e.g. around 100 metres), which is common for substructures used as supports, for oil, platforms; but also in shall-ower waters (e.g. 20 - 30 metres), which is common for wind turbine applications.

Thus, in order to avoid such shear deformations, it is known in the art to connect the j-tube to the substructure via one rigid connection and a plurality of guide support sleeves. This arrangement allows the longitudinal section of the j-tube to slide within the guide support sleeves as the substructure is moving, thus avoiding deformations in the j-tube. One such arrangement is disclosed in U.S. Patent No. 4,523,877, describing a longitudinal section of a j-tube passing through a number, of guide rings which are fixed to the platform. The guide rings prevent horizontal movement of the j-tube longitudinal section with respect to the platform substructure, but allows vertical movement, as well as rotation about a vertical axis. In practical applications, the guide rings or sleeves are rigidly connected to the substructure and provided with an internal coating (e.g. polychloroprene or neoprene) in order to reduce wear due to sliding contact between the sleeve and the j-tube. The gap between the j-tube and the sleeve should on the one hand be small in order to ensure the necessary lateral support for the -j-tube, but on the other hand be large enough to accommodate fabrication tolerances and ensure unimpeded relative movement. The design of the sleeves there requires careful dimensioning, which has a cost effect in both engineering and manufacturing.

The present applicant has devised and embodied this invention to overcome these shortcomings and to obtain further advantages.

### Summary of the invention

The invention is set forth and characterized in the main claim, while the dependent claims describe other characteristics of the invention.

The invention thus provides a support device for one or more elongate elements, characterized by a plate-shaped element having
- a first end portion for rigid connection to a structure,
- at least one second end portion for rigid connection to respective ones of the elongate element, and
- at least one intermediate portion between said end portions,
- each of said intermediate portion having a width dimension which is less than either one of the width dimensions of the end portions, and
- a first transition region between the between the intermediate portion and the first end portion and
- a second transition region between the intermediate portion and the second end portion,
- whereby, when the support device is connected to the structure and the elongate element and subjected to bending moments by either one of the structure or the elongate element, the maximum bending occurs, in said transition regions and axial compression and tension of the elongate element due to movements of the structure is reduced or substantially avoided.

In one embodiment, the support device comprises a first connection profile and a second connection profile, for connecting to the respective one of the structure and the elongate element, and having shapes whereby the plate-shaped element is connected to at least the elongate element in a plane which is substantially perpendicular with respect to the elongate element longitudinal axis.

In one embodiment, the elongate element comprises a tubular element and the second connection profile comprises an arc segment having a radius corresponding to the outer radius of the elongate element. Preferably, the first end portion (16) is connected to a leg, diagonal bracing or horizontal bracing.

The invention also provides a substructure, characterized in that at least one elongate element having a longitudinal section running along a substantial length of the substructure is connected to the substructure via a plurality of support devices according to the invention. Preferably, the longitudinal section of the elongate element is connected to the substructure via a plurality of support devices at regular intérvals. In one embodiments, the longitudinal section of the elongate element is in addition connected to the substructure via a rigid connection.

In one embodiment, the elongate element comprises a j-tube, and the substructure is placed on a seabed and extends a distance above a water surface and supports a wind-powered plant or similar. In one embodiment, the elongate element is connected to a leg of the substructure, or to one or more of the diagonal bracings of the substructure, or to one or more of the horizontal bracings of the substructure, or a combination of a leg and bracings.

The support device according to the invention is particularly suitable for use in connection with wind turbine substructures, particularly substructures which are placed in waters with depths between 20 and 30 metres. The support device is simple than the known support sleeves.

### Brief description of the drawings

These and other characteristics of the invention will be clear from the following description of a preferential form of embodiment, given as a non-restrictive example, with reference to the attached schematic drawings wherein:
Figure 1 is a perspective view of a wind turbine power plant supported by a substructure installed on a seabed;
Figure 2 is a side view of a portion of the substructure;
Figure 3 is a perspective view of a portion of the substructure leg and the j-tube, illustrating a first embodiment of the support device according to the invention;
Figure 4 is a top view of the portion illustrated in figure 3;
Figure 5 is a top view of a variant of the embodiment illustrated in figure 4;
Figure 6 is a top view illustrating a second embodiment of the support device according to the invention;
Figure 7 is a top view of a variant of the embodiment illustrated in figure 6;
Figure 8 is a side view of the support device according to the invention, illustrating the support device in a neutral state and in a deflected (deformed) state;
Figures 9 and 10 similar to figures 4 and 5, respectively, but certain dimensional parameters are indicated; and
Figure 11 is an elevation view illustrating a further embodiment of the support device according to the invention.

### Detailed description of a preferential embodiment

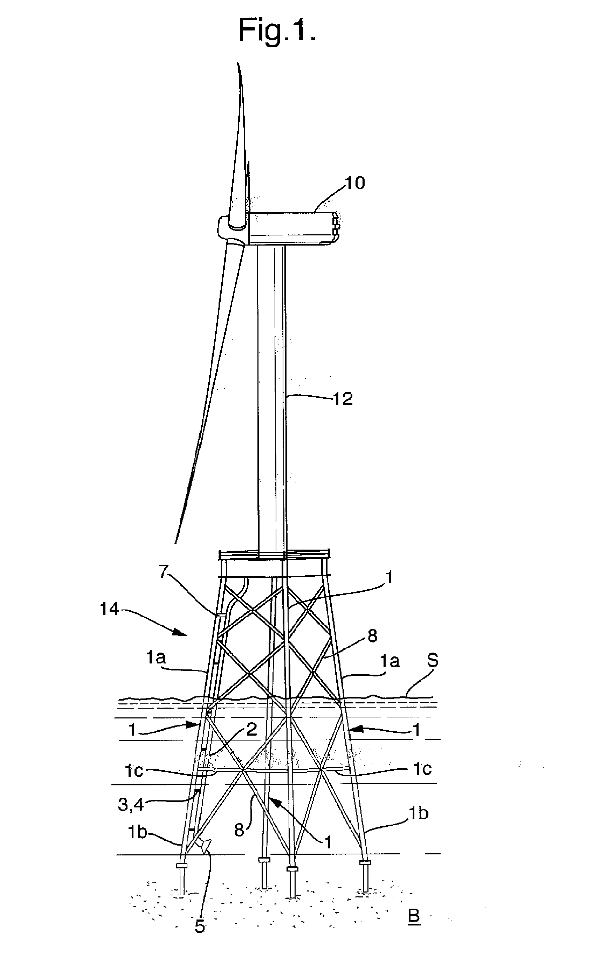

Figure 1 illustrates a wind-powered plant for generating electricity. A substructure or "jacket" 14 is installed on a seabed B (via foundation piles) and comprises main supports - or legs - 1, diagonal bracing 8 and horizontal bracing 1c, and extends a distance above the water surface S where it is connected to a column 12 which carries the wind turbine 10. The legs are normally slender, tubular elements 1a, having a reinforced portion (of a larger diameter) 1b in the lower portion.

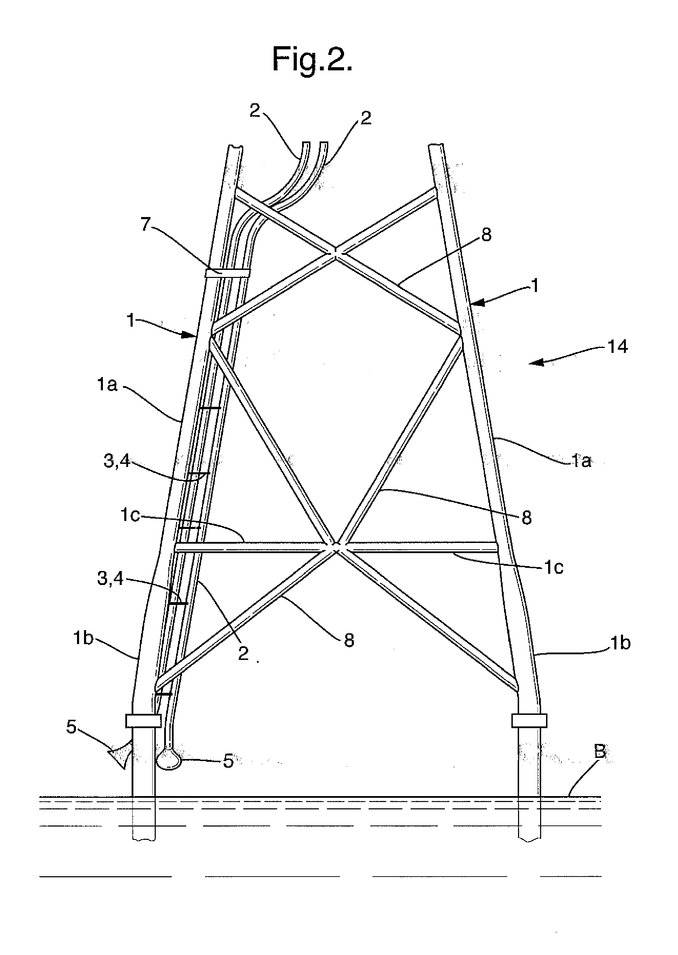

The substructure 14 is provided with one or more j-tubes 2 (only one shown in figure 1), extending between a region near the seabed and the upper part of the structure. Such j-tubes 2 are essentially guide tubes which are used for pulling-in, protecting and supporting cables (not shown), e.g. high voltage cables for the electricity being produced by the wind turbine. In figure 2, which shows only the substructure 14, the j-tubes 2 are shown as having a curved and funnel-shaped lower end, which facilitates the pull-in operation, and a generally longitudinal section, i.e. extending along the length of the substructure 14, i.e. along the substructure's legs 1a,b. As several wind-powered plants are normally connected in a grid, it is customary to install two j-tubes on each substructure. The longitudinal sections of the j-tubes are connected - at regular intervals - to the one of the legs 1 via one rigid connection 7, such as a rigid clamp, or similar, and a plurality of support devices 3, 4.

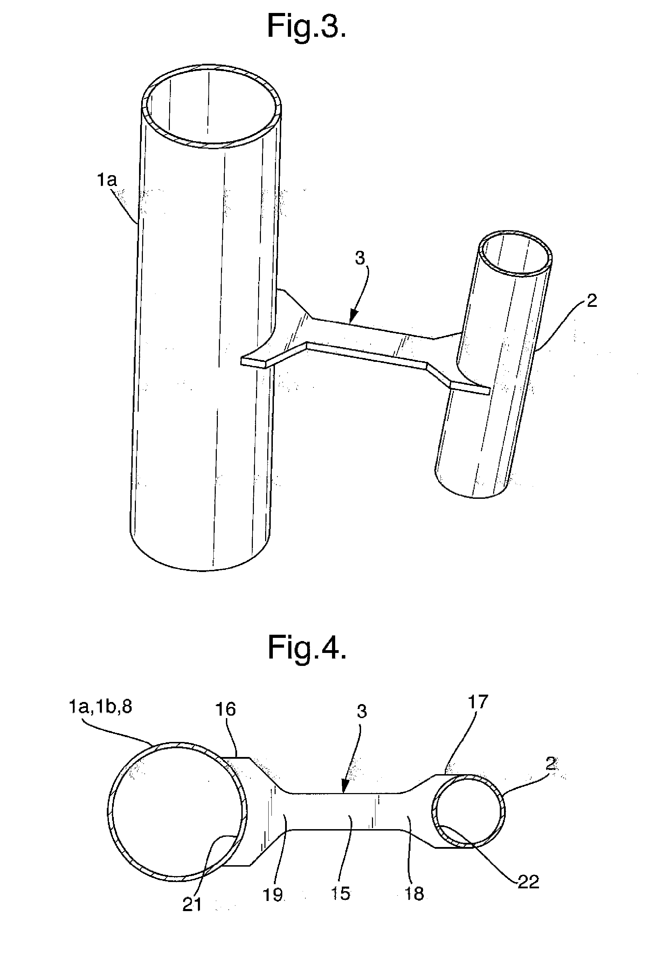

Figures 3, 4 and 5 illustrate a first embodiment of the support device 3, connecting a longitudinal section ofaj-tube 2 to a substructure leg 1a (Only relevant parts of the leg and j-tube are shown).

The support device 3 comprises a plate element having an intermediate portion 15, a first end portion 16 for connection to the leg 1a (or 1b) and a second end portion 17 for connection to the j-tube 2. The end portions 16, 17 are wider than the intermediate portion 15, such that the maximum elastic deformation (and bending stresses) will occur in regions at a distance away from where the support device is attached to the leg and the j-tube. Thus, the maximum deformations occur in transition regions 18, 19 between the intermediate portion 15 and the two end portions 16, 17.

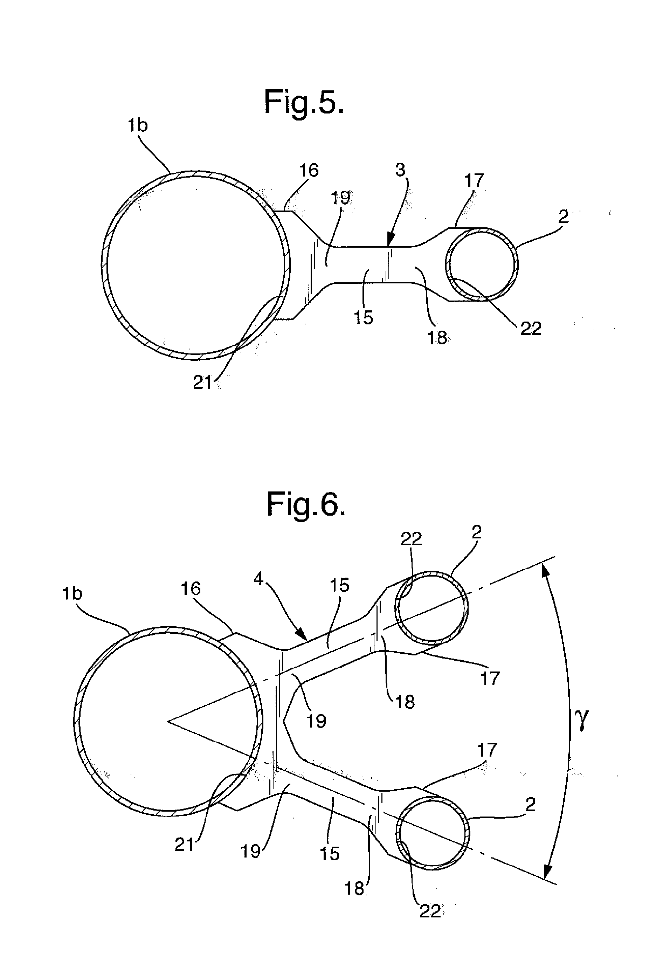

Figures 3 and 4 show the support device connected to an upper part 1a of the leg, while figure 5 shows the support device connected to a lower part 1b of the leg (of greater diameter than the upper part).

The support device is rigidly attached to the leg and the j-tube via respective first and second connection profiles 21, 22; complementary to the shape of the leg and j-tube. The attachment may be by welding, in a manner known in the art.

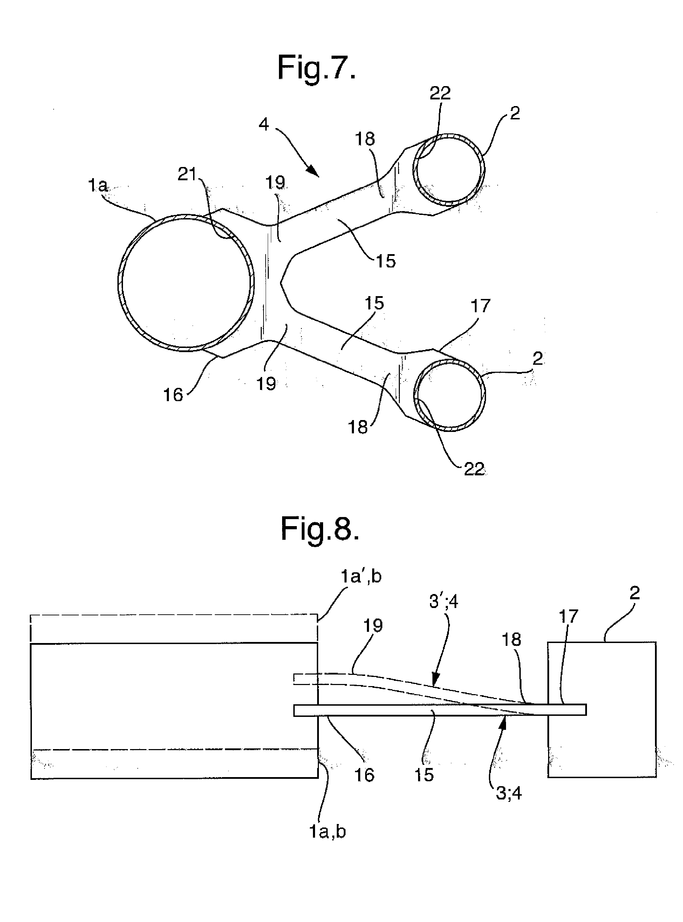

Figures 6 and 7 illustrate a second embodiment of the support device 4, for connecting the longitudinal sections of two j-tubes 2 to a substructure leg. Figure 7 show the support device 4 connected to an upper part 1a of the leg, while figure 6 shows the support device connected to a lower part 1b of the leg (of greater diameter than the upper part).

The support device 4 comprises a plate element having two spaced apart "arms", each arm with an intermediate portion 15 and a second end portion 17 for connection to the j-tube 2. The two arms are spaced apart with an angle γ and joined in a common first end portion 16 for connection to the leg 1a (or 1b). In the illustrated embodiment, γ = 45°.

The end portions 16, 17 are wider than the each intermediate portion 15, such that the maximum elastic deformation (and bending stresses) will occur in regions at a distance away from where the support device is attached to the leg and the j-tube. Thus, as in the first embodiment, the maximum deformations occur in transition regions 18, 19 between the intermediate portion 15 sand the two end portions 16, 17.

Also, as for the first embodiment, the support device 4 is rigidly attached to the leg and the j-tubers via respective first and second connection profiles 21, 22; complementary to the shape of the leg and j-tubes. The attachment may be by welding, in a manner known in the art, and of a strength which is dimensioned for the operational life time of the substructure.

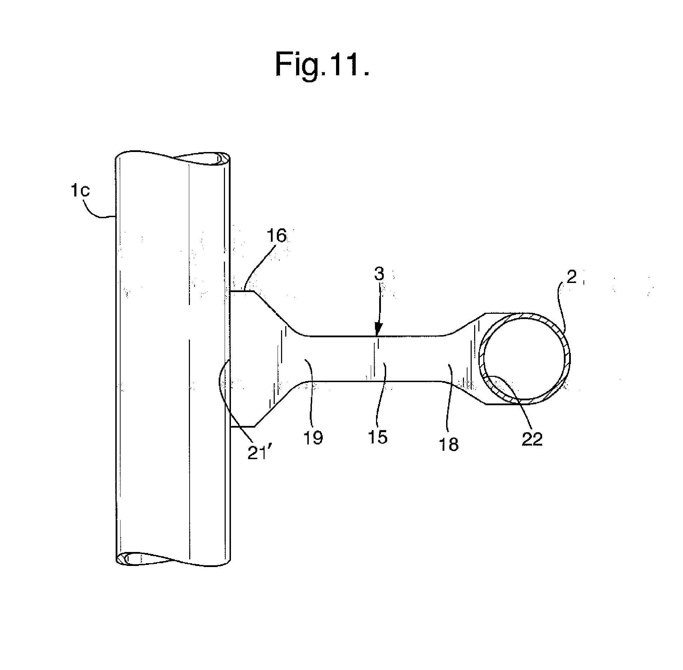

Figure 11 illustrates an embodiment which is similar to the first embodiment, except that the connection profile 21' is straight instead of curved. This is to illustrate that the support device 3 may also be connected to a member in a plane which is substantially coincident with the longitudinal axis of that member. In figure 11, the support device is shown as being connected to a horizontal member 1 of the jacket 14. The skilled person will thus understand that the support device may be connected to any member (e.g. leg, horizontal bracing of diagonal bracing) of the jacket 14, and the connection profile 21,21' against such member is shaped accordingly.

Thus all embodiments of the support device comprise a plate element which in itself is rigidly connected to the leg 1a or 1b and one or more j-tubes 2, but which is sufficiently strong to take the required horizontal loads and sufficiently flexible to take the required shear deformations. The support device material may be any material which is suitable for the intended use of the device. In the illustrated embodiment, the material is carbon steel.

Figure 8 is a schematic illustration of a deformation of the support device 3; 4. The dotted lines and reference number 1'a,b represent the movement of the substructure leg due to the flexing movements of the substructure and reference number 3'; 4' represent the deflected support device 3; 4, while the -tube is kept virtually stationary (bearing in mind that it is connected to the substructure by one rigid connection 7, see figures 1 and 2). Figure 8 thus illustrates how the maximum deformations occur in transition regions 18, 19 between the intermediate portion 15 and the two end portions 16, 17.

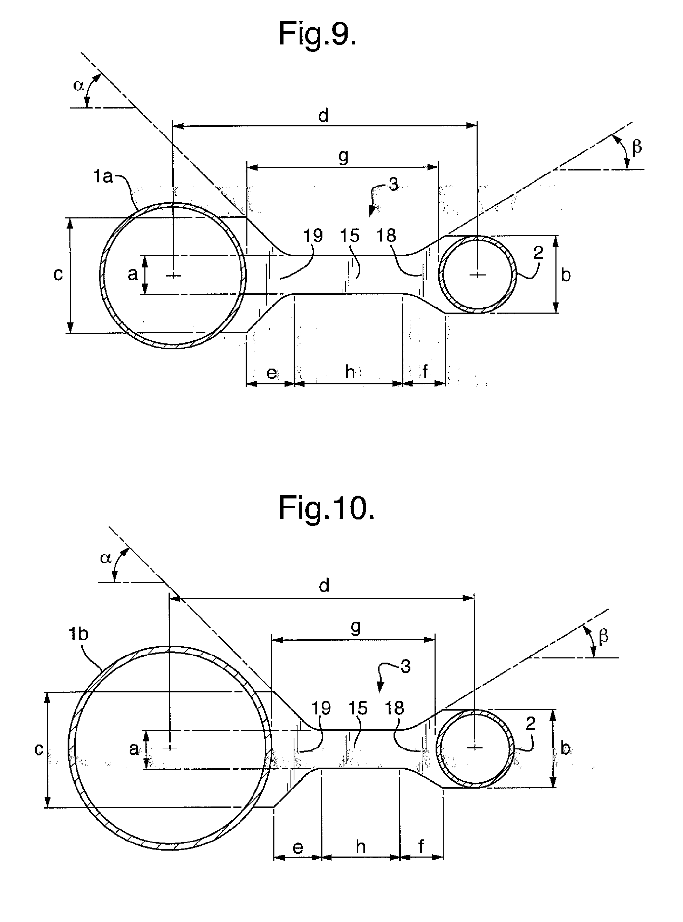

Figures 9 and 10, in combination with the table below, provide numerical values for variants of the first embodiment, where figure 9 illustrates connection to an upper leg 1a, whereas figure 10 illustrates connection to a lower leg 1b. The transition regions 18, 19 are defined by a first taper angle α and a second taper angle β.

| (dimensions in mm) | **Fig. 9** | **Fig. 10** |
|---|---|---|
| a | 200 | 200 |
| b | 400 | 400 |
| c | 600 | 600 |
| d | 1600 | 1600 |
| e | 244 | 244 |
| f | 180 | 180 |
| g | 1016 | 863 |
| h: | 605 | 449 |
| Plate thickness | 25 | 25 |
| Material: carbon steel | | |

In the illustrated embodiments, the first taper angle α is approximately 45°, while the second taper angle β is approximately 30°.

Although the support device has been described with reference to connection to a substructure leg 1, the skilled person will understand that the support device may also be connected to other parts of the substructure, e.g. the diagonal bracing 8 or the horizontal bracing 1c. Also, while the invention has been described with reference to j-tubes, it should be understood that the support device is also suitable for supporting other elongate elements, such as access ladders, caissons, risers, etc.

## Claims

**1.** A support device (3; 4) for one or more elongate elements (2), **characterized by** a plate-shaped element having
- a first end portion (16) for rigid connection to a structure (14),
- at least one second end portion (17) for rigid connection to respective ones of the elongate element (2), and
- at least one intermediate portion (15) between said end portions,
- each of said intermediate portion having a width dimension which is less than either one of the width dimensions of the end portions, and
- a first transition region (19) Between the between the intermediate portion and the first end portion (16) and
- a second transition region (18) between the intermediate portion and the second end portion (16),
- whereby, when the support device (3; 4) is connected to the structure and the elongate element and subjected to bending moments by either one of the structure or the elongate element, the maximum bending occurs in said transition regions (18, 19) and axial compression and tension of the elongate element (2) due to movements of the structure (14) is reduced or substantially avoided.

**2.** The support device of claim 1, further comprising a first connection profile (21; 21') and a second connection profile (22), for connecting to the respective one of the structure (14) and the elongate element (2), and having shapes whereby the plate-shaped element is connected to at least the elongate element (2) in a plane which is substantially perpendicular with respect to the elongate element (2) longitudinal axis.

**3.** The support device of claim 2, wherein the elongate element (2) comprises a tubular element and the second connection profile (22) comprises an arc segment having a radius corresponding to the outer radius of the elongate element.

**4.** The support structure of any one of claims 1 - 3, wherein the first end portion (16) is connected to a leg (1a, 1b), diagonal bracing (8) or horizontal bracing (1c).

**5.** A substructure (14),
**characterized in that** at least one elongate element having a longitudinal section running along a substantial length of the substructure is connected to the substructure (14) via a plurality of support devices (3; 4) according to any one of the preceding claims.

**6.** The substructure of claim 5, wherein the longitudinal section of the elongate element (2) is connected to the substructure (14) via a plurality of support devices (3; 4) at regular intervals.

**8.** The substructure of claim 5 or claim 6, wherein the longitudinal section of the elongate element (2) in addition is connected to the substructure (14) via a rigid connection (7).

**9.** The substructure of any one of claims 5 - 7, wherein the elongate element (2) comprises a j-tube.

**9.** The substructure of any of claims 5 - 8, wherein the substructure (14) is placed on a seabed (B) and extends a distance above a water surface (S) and supports a wind-powered plant (10, 12) or similar.

**10.** The substructure of any one of clams 5 - 9, wherein the elongate element (2) is connected to a leg (1a; 1b) of the substructure, or to one or more of the diagonal bracings (8) of the substructure, or to one or more of the horizontal bracings (1c) of the substructure, or a combination of a leg and bracings.
